# EUROPEAN PATENT APPLICATION

(11) **EP 4 807 584 A1**
(43) Date of publication of application: **16.09.2026**
(21) Application number: 25193406.3
(22) Date of filing: 01.08.2025
(51) Int. Cl.: G06F 16/9032, G06F 16/9035

(54) **INFORMATION PROCESSING DEVICE AND PROGRAM**

(30) Priority: 13.03.2025 US 202519078692
(71) Applicant: Nomura Research Institute, Ltd., Chiyoda-ku Tokyo 100-0004 (JP)
(72) Inventor: Shida, Tomomasa, Frisco, 75034 (US)
(74) Representative: Müller-Boré & Partner Patentanwälte PartG mbB

(57) **Abstract**

An information processing device (101) comprises: a data source (222) that stores data owned by a user; a question input means (212) for receiving an input of a question from a user; a search means (215) for searching for data in the data source (222) on the basis of the question of the user; a prompt generation means (212) for generating a prompt on the basis of the question of the user and the data searched by the search means (215); a generative AI (213) configured to generate an answer to the question of the user on the basis of the prompt; a response generation means (212) for generating a response to the question on the basis of the answer; and an output means (217) for outputting the response generated by the response generation means (212).

## Description

### BACKGROUND OF THE INVENTION

### Field of the Invention

The present invention relates to an information processing device and a program.

### Description of the Related Art

In recent years, the retrieval-augmented generation (RAG) technology, which combines the large language model (LLM) with the retrieval of information outside the LLM, has been known. In Japanese Patent Publication No. 7546326, in order to answer a question regarding a content not included at the time of learning of the LLM, an information processing device is proposed in which learning data necessary for an answer is searched from an in-house database or the like using the RAG, and the searched learning data is added to a search instruction (prompt) to the LLM and delivered, thereby improving accuracy of the answer.

In recent years, a small language model (SLM), which is a language model smaller in scale than the LLM, has been developed. The SLM is a more compact and efficient generative AI model with fewer parameters than the LLM. Whereas LLMs typically have tens to hundreds of billions of parameters, SLMs are configured of hundreds to billions of parameters. The SLM does not require versatility like the LLM but is assumed to be used in an area requiring specific knowledge by causing a model to learn with a data set with a specific field.

In the proposed information processing device, when a generative AI or RAG is built on premise, a technician who is familiar with the generative AI is required. In addition, when a generative AI or RAG is built by a third party, a person outside the company can access confidential information inside the company. Therefore, there is a problem in information security such as information leakage.

In addition, the system using the RAG enables a response reflecting the latest information on internal documents. However, as the accumulation amount of internal shared documents increases, there is a problem that an error (hallucination) occurs in an answer by referring to a document less related to a question.

### SUMMARY OF THE INVENTION

The present invention has been made in view of at least one of the above problems, and implements a technology that enables a generative AI to answer a question on the basis of data owned by an individual while ensuring information security.

The present invention in its first aspect provides an information processing device as specified in claims 1 to 5.

The present invention in its second aspect provides a program as specified in claim 6.

Further features of the present invention will become apparent from the following description of exemplary embodiments (with reference to the attached drawings).

### BRIEF DESCRIPTION OF THE DRAWINGS

FIG. 1 is a diagram illustrating a configuration of an information processing system according to an embodiment;
FIG. 2 is a block diagram illustrating a functional configuration example of an information processing device according to the embodiment;
FIG. 3 is a block diagram illustrating a functional configuration example of a server device according to the embodiment;
FIG. 4 is a diagram for explaining an example of vector data creation according to the embodiment;
FIG. 5 is a diagram illustrating an example of a UI screen according to the embodiment;
FIG. 6 is a diagram for describing settings of a question-and-answer system according to the embodiment; and
FIG. 7 is a flowchart of question-and-answer processing according to the embodiment.

### DESCRIPTION OF THE EMBODIMENTS

### <First embodiment>

An embodiment will be described in detail below with reference to the accompanying drawings. Note that the following embodiment does not limit the invention according to the claims, and all combinations of the features described in the embodiment are not necessarily essential to the invention. Two or more features of a plurality of features described in the embodiment may be arbitrarily combined. In addition, the same or similar configurations are denoted by the same reference numerals, and redundant description will be omitted.

### <Configuration of information processing system>

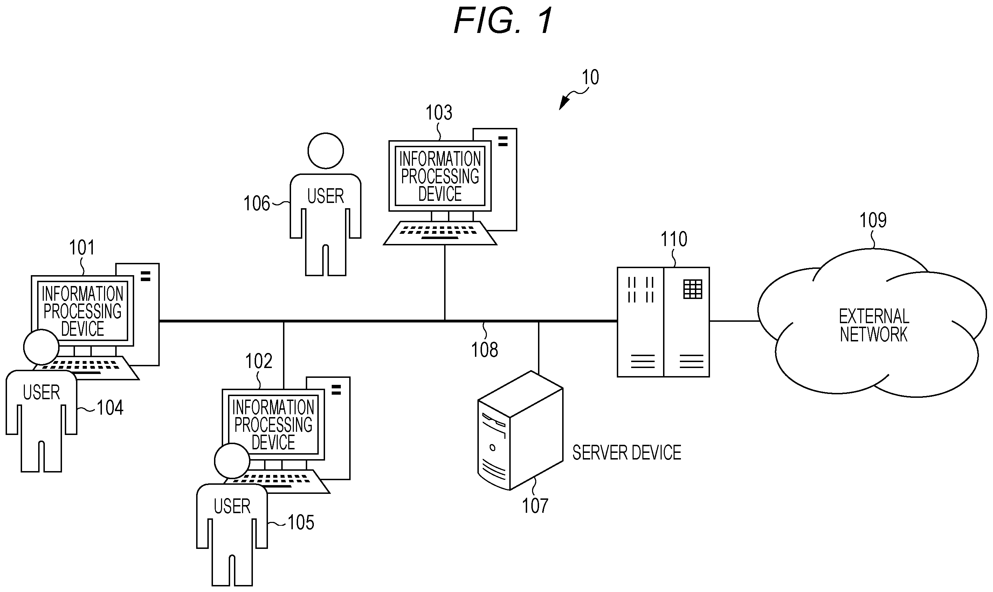

An information processing system according to the present embodiment will be described with reference to FIG. 1. An information processing system 10 includes, for example, information processing devices 101, 102, and 103, and a server device 107. The information processing devices 101 to 103 and the server device 107 are connected via the same local area network (LAN) 108. The LAN 108 may be a wired LAN, a wireless LAN, or a combination thereof. The LAN 108 is connected to an external network 109 (e.g., the Internet) through a firewall 110. The LAN 108 may be, for example, a network inside a company or an organization.

The information processing devices 101 to 103 and the server device 107 can communicate with each other in the LAN 108 (i.e., without going via external network 109). Furthermore, each of the information processing devices 101 to 103 and the server device 107 can communicate with a website on the Internet through the external network 109 via the LAN 108 and the firewall 110. The information processing devices 101 to 103 may be connected to the external network 109 through a cellular network (e.g., network conforming to fourth generation communication standard (4G) or fifth generation communication standard (5G)).

Each of the information processing devices 101 to 103 includes an electronic device such as a personal computer or a tablet terminal used by users 104 to 106. As an example, the users 104 to 106 may be an employee or a member of a company or an organization. Furthermore, the users 104 to 106 are not limited to an employee of a company or an organization, and may be a user to which an access right is granted from a company or an organization. The information processing devices 101 to 103 communicate with the server device 107 via the LAN 108, and can access the server device 107 from the external network 109 such as the Internet in the same environment as the dedicated line by VPN connection or the like. In FIG. 1, three users 104 to 106 exist as users, and three information processing devices 101 to 103 are associated with the users 104 to 106, respectively. The present invention is not limited to this form, and a plurality of information processing devices may be assigned to a user, or one information processing device may be assigned to a plurality of users. Furthermore, the number of users and the number of information processing devices are arbitrary. In the following description, an example in which the user 104 uses the information processing device 101 will be described.

The server device 107 manages the information processing devices 101 to 103 connected to the LAN 108 and the users 104 to 106. Access to the server device 107 from the external network 109 such as the Internet is blocked by the firewall 110.

### <Configuration of information processing device>

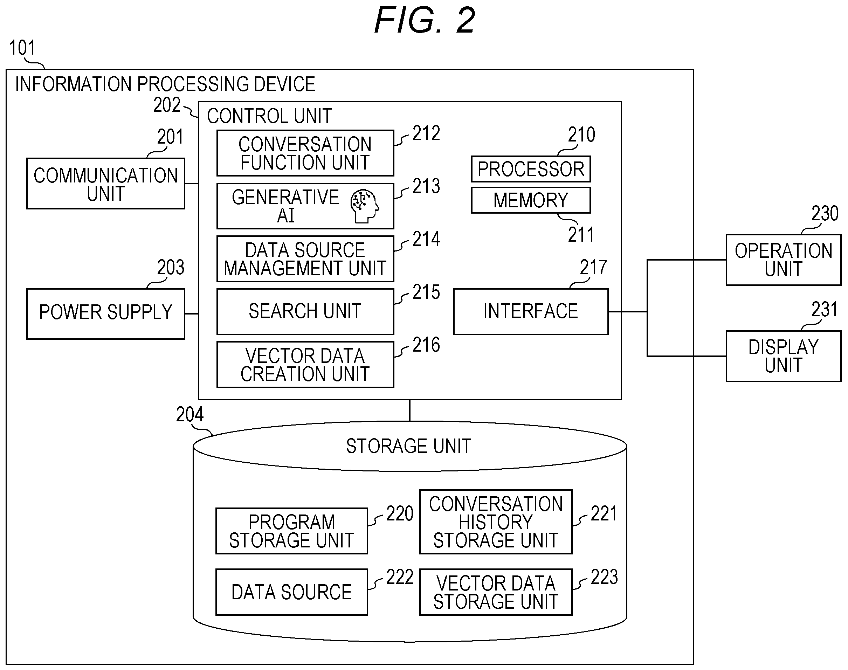

Next, a functional configuration example of the information processing device 101 will be described with reference to FIG. 2. Note that the functional blocks described with reference to FIG. 2 may be integrated or separated, and a described function may be implemented by another block. In addition, what is described as hardware may be implemented by software, and vice versa.

A communication unit 201 includes a communication circuit or a communication module capable of communicating with each of the other information processing devices and the server device 107 via the LAN 108. Furthermore, the communication unit 201 can be connected to the external network 109 via the LAN 108 and the firewall 110.

A control unit 202 includes a processor 210 and a memory 211. The processor 210 may be configured by one or more processors. The processor 210 may include a GPU in addition to the CPU. The control unit 202 controls the operation of each unit of the information processing device 101 by causing the processor 210 to execute a computer program stored in the memory 211 or a storage unit 204. Furthermore, the functions of the units included in the control unit 202 are implemented, for example, by the processor 210 executing a program. In the present embodiment, an application program 224 according to the present embodiment is stored in a program storage unit 220 of the storage unit 204. The present invention is not limited thereto, and the program may be stored in an external storage medium.

The memory 211 is a volatile storage medium such as a DRAM, and temporarily stores parameters, processing results, and the like for the control unit 202 to execute a computer program. A power supply unit 203 is a power supply for providing electric power for each unit of the information processing device 101 to operate.

The storage unit 204 includes, for example, a nonvolatile storage medium such as a hard disk or a semiconductor memory, and stores setting values necessary for the operation of the information processing device 101, a computer program, and the like. The computer program held in the storage unit 204 includes an operating system and various applications for implementing various functions of the information processing device 101. The storage unit 204 includes the program storage unit 220, a conversation history storage unit 221, a data source 222, and a vector data storage unit 223. The program storage unit 220 stores the application program 224 of the present embodiment. The application program 224 of the present embodiment is read and executed by the information processing device 101 to implement a question-and-answer system.

The conversation history storage unit 221 stores information of a history of conversation of the user 104 with the information processing device 101 by the question-and-answer system of the present embodiment. The data source 222 stores data such as a file owned by the user 104. The vector data storage unit 223 stores vector data obtained by vectorizing data of the data source 222.

The control unit 202 includes, as functions, a conversation function unit 212, a generative AI 213, a data source management unit 214, a search unit 215, a vector data creation unit 216, and an interface 217.

The application program 224 of the present embodiment is read and executed by the information processing device 101, thereby providing a question-and-answer system in which the user 104 has a conversation on the user interface, asks a question to the generative AI 213 inside the information processing device 101, and obtains an answer. The conversation function unit 212 is a function unit having a conversation function of the question-and-answer system in the present embodiment. The conversation function unit 212 provides the user 104 with a so-called chat function. The conversation function unit 212 accepts a question input by the user 104 via an operation unit 230. The conversation function unit 212 instructs the generative AI 213 to answer the question of the user 104. Furthermore, the conversation function unit 212 causes the search unit 215 to search for data in the data source 222 or vector data in the vector data storage unit 223 according to the content of the question of the user 104. Furthermore, the conversation function unit 212 instructs the generative AI 213 to answer the question from the user 104 using the data or the vector data searched by the search unit 215. An instruction to request an answer to the question to the generative AI 213 may be referred to as a "prompt". The conversation function unit 212 generates a prompt for instructing the generative AI 213 to answer on the basis of a question from the user 104 and the data or vector data searched by the search unit 215, and instructs the generative AI 213 to answer the question from the user 104 on the basis of the prompt. The conversation function unit 212 causes the interface 217 to generate a display screen according to the answer of the generative AI 213, and the interface 217 causes a display unit 231 to display the generated display screen.

The generative AI 213 has a Q & A function of responding to a prompt. The conversation function unit 212 stores the content of the conversation with the user 104 in the conversation history storage unit 221 of the storage unit 204, and manages the content of the conversation with the user 104 held in the same session as a history. As a result, the conversation function unit 212 can accept continuous questions from the user 104 in the same session. For example, the conversation function unit 212 can further accept a question in response to a previous question from the user 104. The conversation function unit 212 analyzes the question of the user 104, captures necessary information from the conversation history of the conversation history storage unit 221, and generates a prompt.

The generative AI 213 executes processing with a machine learning model that has been trained on a large amount of data. The machine learning model of the generative AI 213 may be an LLM or an SLM. In addition, the machine learning model of the generative AI 213 may be a local LLM. Furthermore, the model of the generative AI 213 is not limited to a natural language, and may be a machine learning model configured to answer a prompt including an image and voice. The generative AI 213 of the present embodiment is not present on a server but operates inside the information processing device 101 owned by the user 104. Therefore, even in a state where the information processing device 101 is not connected to the network 108, the question-and-answer system can ask the generative AI 213 to respond. In a case where the SLM, which is a language model smaller in scale than the LLM, is used as the generative AI 213, the power consumption of the information processing device 101 can be made smaller than in a case where the LLM is used. In addition, in a case where the SLM is used as the generative AI 213, the performance of hardware for executing the generative AI 213 can be reduced as compared with a case where the LLM is used. For example, even if the capacity and speed performance of the storage unit 204, the processor 210, and the memory 211 of the information processing device 101 are not high, the generative AI 213 using the SLM can be practically operated. That is, when the SLM is used, the cost of the information processing device 101 can be suppressed.

The generative AI 213 has a function of using a prompt including the content of a question input from the user 104 via the operation unit 230 as an input, and outputting an answer to the prompt. In the present embodiment, the generative AI 213 uses a prompt including the content of the data of the data source 222 as an input, and outputs an answer to a question input from the user with reference to the data of the data source 222.

The data source management unit 214 manages data stored in the data source 222. A file (data), such as a document file, created, for example, by the user 104 and owned by the user 104 is stored in the data source 222. The data source management unit 214 may manage files of the entire storage unit 204 or may manage a specific region or folder of the storage unit 204. The data source management unit 214 may manage bibliographic information such as a title, a creator, and a creation date of a file stored in the data source 222, and a storage location. The file stored in the data source 222 is not limited to a document file, and may be in any format. Furthermore, a correspondence relationship between a file of the data source 222 and vector data of the vector data storage unit 223 described later may be managed.

The data source 222 stores a file created, for example, by the user 104. The file of the data source 222 may be a file related to business of a firm, a company, an organization, or the like, or may be another file. For example, the file may be a personal file, or a file (e.g., file in which design document is described, or file in which information of website is acquired and recorded in advance) in a system accessible by the authority of a specific individual or organization. The file stored in the data source 222 may be a spreadsheet or simple data in addition to a document file. The data source 222 may be the entire region of the storage unit 204 of the user 104, or may be a specific region (partition) or folder of the storage unit 204.

Upon receiving a search instruction from the conversation function unit 212, the search unit 215 searches for one or both of the data stored in the data source 222 and the vector data stored in the vector data storage unit 223. The search unit 215 can search for data similar to the user's question at high speed by searching for vector data. The search unit 215 returns the searched data and vector data to the conversation function unit 212. The search unit 215 may search for the vector data in the vector data storage unit 223 by a vector, or may search for a file (data) stored in the data source 222 by text. In addition, the search unit 215 may be able to perform search by search specifying a file, keyword search, vector search, hybrid search, semantic search, and hybrid search + semantic ranking. The search method performed by the search unit 215 may be some of these search methods or may include other search methods.

Keyword search is a search method for searching for a document including a keyword of a question sentence. It is also referred to as full text search. Vector search is a method of searching for a document by converting a question sentence and a document to be searched into numerical expressions (vectors) and determining that the question sentence and the document to be searched are more similar as the distance between the two vectors is shorter. Hybrid search is a method of searching for a document by combining keyword search and vector search. Semantic search is a method of understanding the meaning and intention of a search question sentence and searching for a document on the basis of the meaning and intention. Hybrid search + semantic ranking is a method of semantically ranking the results of hybrid search.

The vector data creation unit 216 creates vector data of a file (data) stored in the data source 222, and stores the created vector data in the vector data storage unit 223. When a file of the data source 222 is updated by the user 104 or when a file is deleted, the corresponding vector data in the vector data storage unit 223 may be updated or deleted. The vector data creation unit 216 may create vector data for a new file stored in the data source 222 or a newly registered file or an updated file periodically such as once a day, and store the vector data in the vector data storage unit 223. When the search unit 215 searches for a file (data) of the data source 222, the file (data) may be vectorized, and the vector data may be stored in the vector data storage unit 223. The timing at which the vector data creation unit 216 vectorizes the file (data) stored in the data source 222 is arbitrary.

In addition, for a file (data) stored in the data source 222, the vector data creation unit 216 may store the created vector data in the vector data storage unit 223 using bibliographic information such as a title, a creator, and a creation date of the file as an index. In addition, the vector data creation unit 216 may store both the vector data of the file and the text data of the file in the vector data storage unit 223. Furthermore, as the index of the vector data in the vector data storage unit 223, information on whether to permit sharing of the vector data with other users may be included.

Any method of vectorization of a file by the vector data creation unit 216 may be used. For example, words may be extracted and vectorized. In the present embodiment, the generative AI 213 may vectorize data of a file using an embedding function of the generative AI 213. The vector data creation unit 216 creates a prompt to vectorize data of a file stored in the data source 222 by the embedding function of the generative AI 213, and instructs the generative AI 213 to vectorize the file. The generative AI 213 vectorizes the data of the file according to the embedding instruction. The vector data creation unit 216 stores vector data obtained by vectorizing the file in the vector data storage unit 223 in association with bibliographic information of the file. By searching for vector data in the vector data storage unit 223, the search unit 215 can perform a search faster than searching for data in the data source 222.

The interface 217 provides a user interface via the operation unit 230 and the display unit 231. The interface 217 outputs a user interface (UI) screen of a conversation based on the conversation function unit 212 to the display unit 231, and accepts an operation and a question input from the user 104 via the operation unit 230.

The operation unit 230 includes an input device such as a keyboard, a mouse, a button, or a touch panel included in the information processing device 101, and accepts an operation of the keyboard or the mouse or a user operation on a GUI for various operations displayed on the display unit 231.

The display unit 231 includes a display device such as an LCD or an OLED, for example. The display unit 231 displays a dialogue screen provided by the application program 224 in response to an instruction from the control unit 202. The control unit 202 causes the display unit 231 to display the dialogue screen by, for example, a web browser or the application program 224. The power supply unit 203 provides electric power to each unit of the information processing device 101.

### <Configuration of server device>

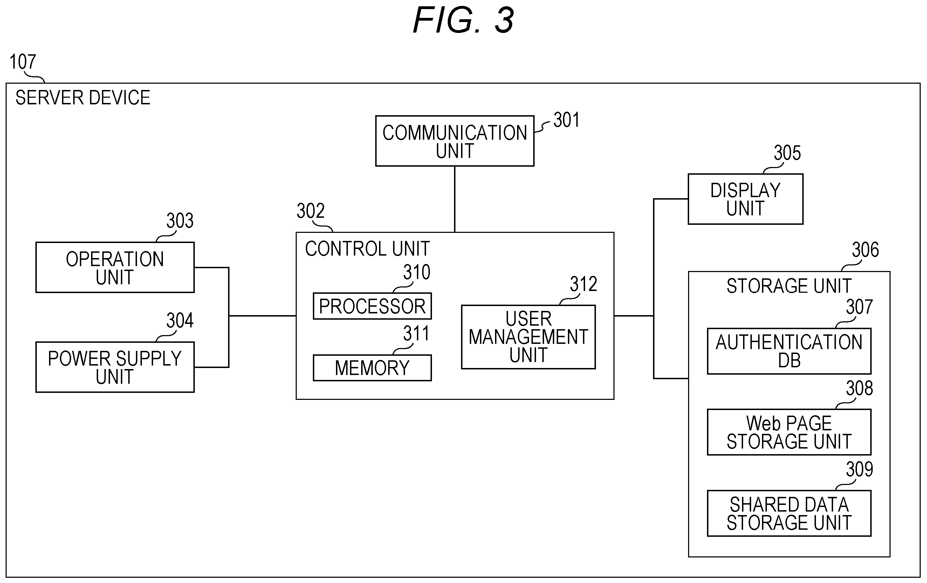

Next, a functional configuration example of the server device 107 will be described with reference to FIG. 3. Note that the functional blocks described with reference to the following drawings may be integrated or separated, and the described functions may be implemented by other blocks. In addition, what is described as hardware may be implemented by software, and vice versa.

A communication unit 301 includes, for example, a communication circuit and the like, and is connected to a network via, for example, wireless LAN communication to communicate with the information processing devices 101 to 103.

A control unit 302 includes a processor 310 and a memory 311, and controls the operation of each unit in the server device 107 by the processor 310 executing a computer program stored in a storage unit 306, for example. The processor 310 includes one or more processors, and the memory 311 includes a volatile memory such as a DRAM.

Furthermore, the control unit 302 includes a user management unit 312. The user management unit 312 manages authentication of the users 104 to 106 and the access right of the users 104 to 106 using an authentication DB 307.

The storage unit 306 includes, for example, a nonvolatile memory such as a semiconductor memory, and holds the program executed by the control unit 302 and a setting value. The computer program held in the storage unit 306 includes an operating system and various applications for implementing various functions of the server device 107. The storage unit 306 may include the authentication database (DB) 307, a web page storage unit 308, and a shared data storage unit 309.

The authentication DB 307 manages information for performing authentication when the users 104 to 106 access the information processing system 10. The authentication DB 307 may be configured such that a system administrator in an organization such as inside a company integrally manages the users 104 to 106 and the information processing devices 101 to 103 of the organization. The authentication DB 307 may manage the users 104 to 106 in a domain of an organization hierarchy. Using the authentication DB 307, the user management unit 312 may control access to web pages and data stored in the web page storage unit 308 and the shared data storage unit 309 of the storage unit 306 of the server device 107 by the users 104 to 106, a department to which the user belongs, or the like.

The web page storage unit 308 may store a web page of the company intranet or may store a web page acquired from an external server via the external network 109. The server device 107 may scroll a web site on the Internet to acquire a web page, and store the web page in the web page storage unit 308. The users 104 to 106 can access the web page stored in the web page storage unit 308 according to their access rights.

The shared data storage unit 309 stores data and files that can be commonly accessed by users. All users may be able to commonly access files and data stored in the shared data storage unit 309, or the user management unit 312 may limit access to files and data depending on the affiliation of the user. For example, the user management unit 312 may perform control such that the user 104 cannot access shared data of departments other than the department to which the user 104 belongs.

An operation unit 303 includes an input device such as a keyboard, a mouse, a button, or a touch panel included in the server device 107, and accepts an operation of the keyboard or the mouse or a user operation on a GUI for various operations displayed on a display unit 305.

The display unit 305 includes a display device such as an LCD or an OLED, for example. A power supply unit 304 provides electric power to each unit of the server device 107.

### <Creation of vector data>

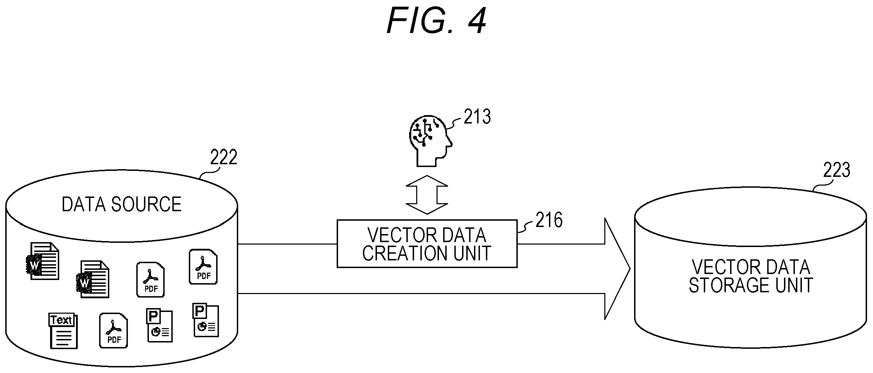

An outline of creation of vector data and a configuration of the vector data storage unit 223 will be described with reference to FIG. 4. In the present embodiment, the data source 222 includes one or more files.

In FIG. 4, the file stored in the data source 222 may be a file of any format such as PDF, text, text editing software, presentation software, spreadsheet software, or the like. The vector data creation unit 216 acquires a file (data) stored in the data source 222 regularly or irregularly, or on the basis of a notification or a request. The vector data creation unit 216 vectorizes the acquired file (data) to create vector data of the file.

The vector data creation unit 216 may instruct the generative AI 213 to embed data for the data of the file acquired from the data source 222. The generative AI 213 vectorizes the data in response to the instruction to embed the data, and returns the generated vector data to the vector data creation unit 216.

The vector data creation unit 216 registers the vector data generated by the generative AI 213 in the vector data storage unit 223 with bibliographic information such as the title, the creator, and the creation date of the file as an index. The vector data creation unit 216 may register the storage location of the file of the data source 222 corresponding to the vector data. Text data of the file may be stored in the vector data storage unit 223 together with the vector data. The search unit 215 can perform vector search on the vector data in the vector data storage unit 223, and the generative AI 213 can answer a question using the searched vector data of the source data of the user.

### <Answer by generative AI using data of data source>

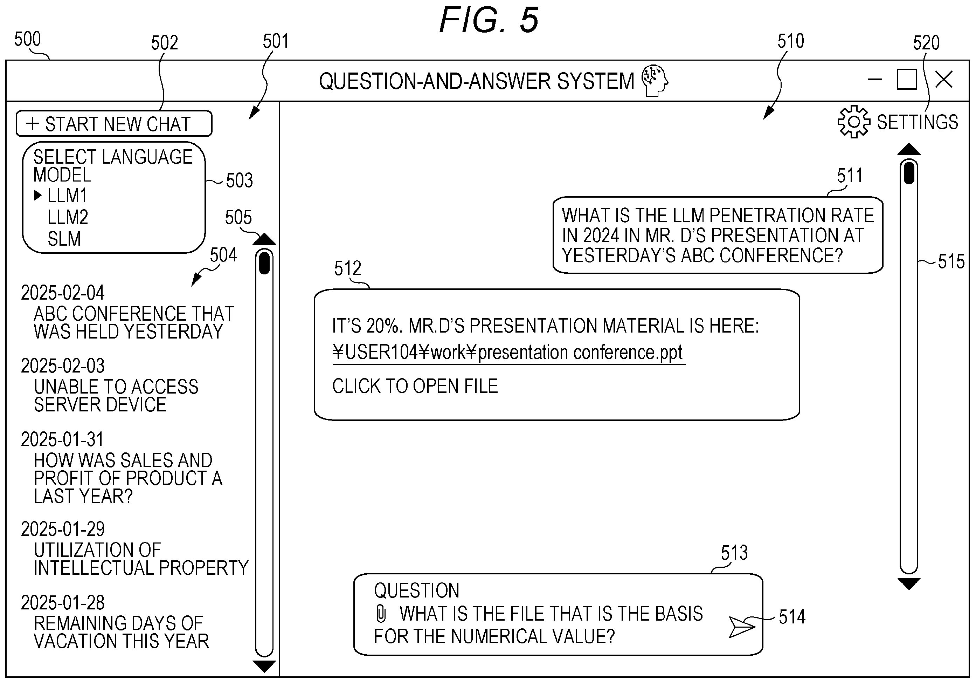

Next, a method of answering a question by the generative AI 213 using data of the data source 222 will be described with reference to FIG. 5. A question-and-answer system is implemented in the information processing device 101 by the application program 224 of the present embodiment. In the question-and-answer system, a user interface (UI) screen 500 is displayed on the display unit 231 of the information processing device 101. The UI screen 500 is a screen for displaying an operation input and a result of the question-and-answer system according to the present embodiment.

By logging in to the information processing device 101 and calling the question-and-answer system, the question-and-answer system can be used. The question-and-answer system may be activated after authentication is performed by a user ID and a password when the question-and-answer system is called, or the question-and-answer system may be enabled by login of the information processing device 101. When the question-and-answer system is activated, the UI screen 500 is displayed on the display unit 231. The conversation function unit 212 and the interface 217 control a conversation with the user 104 and display of the UI screen 500. In the question-and-answer system, the conversation function unit 212 conducts a conversation between the user 104 and the generative AI 213 in a chat format.

In FIG. 5, the UI screen 500 includes a left sidebar region 501 and a right conversation region 510. A sidebar region 501 includes a chat start button 502, a language model selection region 503, a chat history region 504, and a scroll bar 505.

The language model selection region 503 is a region in which a language model can be selected from one or more language models. The selectable language model may be a language model in which learning specialized for a specific field or region is performed. A language model desired by the user may be downloaded from a website and installed in advance.

When the user 104 operates the chat start button 502 using the operation unit 230, the conversation function unit 212 starts a new conversation session via the interface 217. The chat history region 504 is a region for displaying a past chat history. In the chat history region 504, a past chat history is displayed in time series for each conversation session. The past chat history can be scrolled by the scroll bar 505. When the user 104 selects one conversation session from the chat history, the conversation function unit 212 reads information of the selected past conversation session from the conversation history storage unit 221 via the interface 217. Then, the conversation function unit 212 displays the selected past conversation session in the conversation region 510 of the UI screen 500 via the interface 217.

Next, the conversation region 510 will be described. In the conversation region 510, a conversation session currently being held is displayed. As an example, a user message 511, a response message 512 based on the answer of the generative AI 213, and a message input box 513 are displayed. When the user 104 inputs a question sentence into the message input box 513 by the operation unit 230 and operates a send icon 514, the question sentence is transmitted to the conversation function unit 212 via the interface 217. The question sentence input by the user is displayed like the user message 511. In the conversation region 510, it is possible to display an entire conversation by operating a scroll bar 515 to scroll through the conversation of the same session.

The response message 512 is displayed on the basis of the answer from the generative AI 213. The question input by the user 104 is displayed on the right side of the conversation region 510, and the response from the question-and-answer system is displayed on the left side of the conversation region 510. The user message 511 of the user 104 and the response message 512 may be displayed in any manner as long as they can be distinguished from each other. For example, display colors of the user message 511 and the response message 512 may be varied.

The response message 512 is generated on the basis of the answer by the generative AI 213 using information of data of the data source 222. The processing of generating the response message 512 will be described later.

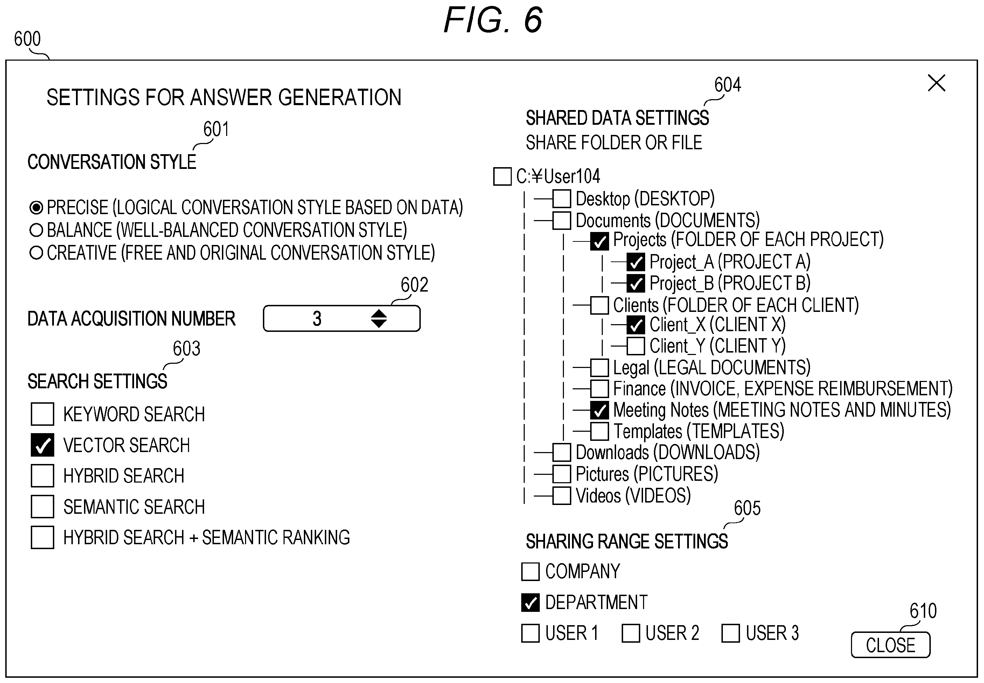

A settings button 520 is a button for performing settings of the question-and-answer system of the present embodiment. When the user 104 operates the settings button 520, a settings screen 600 of FIG. 6 is displayed. Conversation style 601 is the setting of the conversation style of the generative AI 213. The conversation style of the generative AI can be selected according to the application from three styles of "precise (logical conversation style based on data)", "balance (well-balanced conversation style)", and "creative (free and original conversation style)". This setting may depend on the generative AI 213 to be used selected in the language model selection region 503.

Data acquisition number 602 sets the number of data (number of files) to be acquired from the data source to be referred to by the generative AI 213 when the generative AI 213 answers. In the example of FIG. 6, it is set that the contents of three files are referred together with a prompt when asking a question to the generative AI 213. Search settings 603 selects a search method when the search unit 215 searches the data source 222 or the vector data storage unit 223. The search method can be selected from among the search methods of keyword search, vector search, hybrid search, semantic search, and hybrid search + semantic ranking described above.

Shared data settings 604 is set in a case where the user 104 shares a file (data) of the user 104 to be referred to by the generative AI 213 with another user. The user 104 can select folders and files that may be shared with other users from the list of folders and files of the information processing device 101.

Sharing range settings 605 sets a range of users with whom the user 104 may share data of its own data source 222. The user 104 can set a range of users who share data from the company, the department to which the user belongs, a specific user, and the like. Data sharing of the data source 222 will be described in a second embodiment described later.

When a close button 610 is operated by the user 104, the conversation function unit 212 closes the settings screen 600 and returns to the UI screen 500 of FIG. 5.

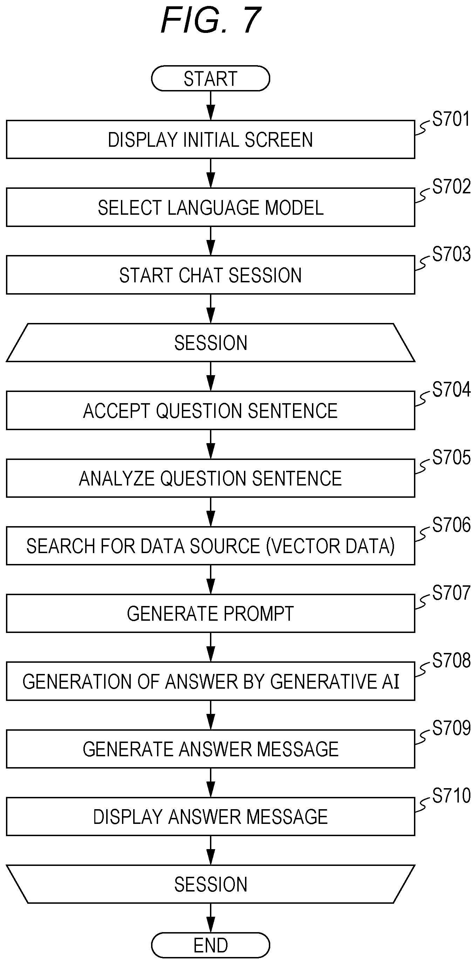

Question-and-answer processing using the generative AI 213 will be described with reference to FIG. 7. The flow of FIG. 7 is achieved by the processor 210 of the control unit 202 of the information processing device 101 reading a computer program recorded in the storage unit 204 into the memory 211 and executing the computer program.

The flow of FIG. 7 begins when the user 104 logs into the question-and-answer system. The user 104 inputs a user ID and a password for logging in to the question-and-answer system from the information processing device 101 using the operation unit 230. The login to the question-and-answer system may be enabled when logging in to the information processing device 101, or may be separate from the login to the information processing device 101.

When the login of the user 104 is authenticated, in S701, the conversation function unit 212 causes the display unit 305 to display an initial screen of the question-and-answer system via the interface 217. The initial screen may be the UI screen 500 illustrated in FIG. 5 or another screen. The screen may be a screen at the end of a previous time.

In S702, the user 104 selects a language model to be used from one or more language models in the language model selection region 503 of the UI screen 500. When there is one language model, the step of S702 may be omitted. The language model selection region 503 is displayed in a state where the previously selected language model is selected. The user 104 may omit the step of S702 if it is not necessary to change the language model to be used from the previous language model.

In S703, when the chat start button 502 is operated by the user 104, the conversation function unit 212 starts a new chat session. The conversation function unit 212 generates a new chat session by assigning a session ID, and records the chat session in the conversation history storage unit 221. Then, the conversation function unit 212 displays a chat start screen on the display unit 231 via the interface 217. As a result, the user 104 can generate a new chat session.

In S704, the user 104 inputs a question sentence from the operation unit 230 of the information processing device 101 into the message input box 513 of the UI screen 500, and operates the send icon 514. On the UI screen 500 in FIG. 5, as a result of the user 104 inputting a message "I do not know in which folder the presentation material of the conference created yesterday is stored." in the message input box 513 and sending the message to the question-and-answer system, the question sentence input in the user message 511 is displayed. Such a sentence in a natural language may be input as the question sentence.

In S705, the question sentence input by the user 104 is analyzed by the conversation function unit 212. The conversation function unit 212 analyzes the question sentence by two methods. First, the conversation function unit 212 performs morphological analysis and syntax analysis on the question sentence, performs weighting, and extracts words. The extracted words are keywords. In the case of the question sentence "I do not know in which folder the presentation material of the conference created yesterday is stored.", the conversation function unit 212 weights the words such as "yesterday 0.1", "conference 0.3", "presentation material 0.5", and "folder 0.1", and extracts the keywords. In the case of semantic search, not only words included in the question sentence but also the context is analyzed, and addition of keywords similar in context and weighting of keywords according to context are performed.

Secondly, the conversation function unit 212 instructs the generative AI 213 to vectorize the question sentence. The generative AI 213 that has received the instruction vectorizes the question sentence by the embedding function and returns the result to the conversation function unit 212.

In the question sentence analysis in S705, only one or both of keyword extraction and vectorization of the question sentence may be performed. Which one of keyword extraction from the question sentence and vectorization of the question sentence is to be performed may be determined by the search method selected in the search settings 603 on the settings screen 600.

In S706, in response to the instruction from the conversation function unit 212, the search unit 215 searches for a file of the data source 222 or vector data of the vector data storage unit 223 using one or both of a keyword extracted from the question sentence and vector data of the question sentence.

The search unit 215 changes the search method according to the setting of the search settings 603 on the settings screen 600. In a case where any of keyword search, semantic search, hybrid search, and hybrid search + semantic ranking is set in the search settings 603, the search unit 215 searches text data in the vector data storage unit 223 by keyword. By weighting the keywords of the question sentence and weighting the words of the text data of the search target file, pieces of text data of files are extracted in the order of similarity to the question sentence on the basis of the frequency and similarity between the keywords and the words.

In a case where any of vector search, hybrid search, and hybrid search + semantic ranking is set in the search settings 603, the search unit 215 calculates cosine similarity, for example, between the vector data of the question sentence and the vector data of the vector data storage unit 223, and extracts text data of a file having high similarity to the question sentence.

In a case where any of hybrid search and hybrid search + semantic ranking is specified in the search settings 603, the search unit 215 determines the text data of a candidate file by combining a search result by the keyword and a search result by the cosine similarity of the vector. In a case where hybrid search + semantic ranking is specified in the search settings 603, the search unit 215 further performs ranking according to the semantic of the question sentence using the words appearing in the text data of the candidate file.

When the search result of the vector data is obtained from the vector data storage unit 223, the search unit 215 extracts the data of the number designated in the data acquisition number 602 on the settings screen 600 in descending order of similarity. In the example of FIG. 6, since "3" is set as the data acquisition number 602, the search unit 215 extracts three pieces of data in descending order of similarity. Then, the search unit 215 returns the three pieces of data to the conversation function unit 212. The information returned from the search unit 215 to the conversation function unit 212 may be either vector data or text data. Furthermore, the search unit 215 may acquire a file corresponding to vector data from the data source 222 and return the file to the conversation function unit 212. In addition, the conversation function unit 212 may acquire information specifying a file from the search unit 215 and acquire vector data or text data of the file, or the file from the vector data storage unit 223 or the data source 222.

In S707, the conversation function unit 212 generates a prompt for instructing the generative AI 213 to answer. The conversation function unit 212 specifies three pieces of data similar to the question sentence of the user 104 searched by the search unit 215, and generates a prompt to answer the question "I do not know in which folder the presentation material of the conference created yesterday is stored." of the user 104. The data specified in the prompt by the conversation function unit 212 may be vector data or text data. The conversation function unit 212 may embed text data as a context in the prompt. Furthermore, the conversation function unit 212 may attach any one or a plurality of pieces of vector data, text data, and files to the prompt.

In S708, the generative AI 213 receives a prompt from the conversation function unit 212, and generates an answer on the basis of the question sentence of the user 104 and the three pieces of data related to the question sentence searched by the search unit 215. Next, the generative AI 213 returns the generated answer to the conversation function unit 212.

In S709, the conversation function unit 212 generates a response message to the question sentence of the user 104 on the basis of the answer generated by the generative AI 213. The conversation function unit 212 may directly use the answer of the generative AI 213 as a response message, or may generate a response message on the basis of the answer of the generative AI 213.

For example, in the example of the UI screen of FIG. 5, if the user 104 asks "What is the LLM penetration rate in 2024 in Mr. D's presentation at yesterday's ABC conference?", the question-and-answer system may generate the response message 512:
"It's 20%. Mr. D's presentation material is here:
¥USER104¥work¥presentation_conference.ppt
Click to open the file."

Processing of generating the response message 512 will be described.

The conversation function unit 212 instructs the generative AI 213 to vectorize the question sentence "What is the LLM penetration rate in 2024 in Mr. D's presentation at yesterday's ABC conference?" of the user 104.

Next, the search unit 215 acquires a vectorized question sentence vector and similar vector data of the question sentence "What is the LLM penetration rate in 2024 in Mr. D's presentation at yesterday's ABC conference?" of the user 104 from the vector data storage unit 223. The search unit 215 may specify top three pieces of vector data having high similarity from the data updated yesterday, the data related to the conference, and vector data of a file in a presentation format.

Next, the generative AI 213 generates an answer to the question of the user 104 with reference to the top three pieces of vector data having high similarity to the question of the user 104, which have been searched by the search unit 215.

The generative AI 213 responds to the question sentence "What is the LLM penetration rate in 2024 in Mr. D's presentation at yesterday's ABC conference?" of the user 104 with "It's 20%. Mr. D's presentation material is here: ¥USER104¥work¥presentation_conference.ppt.".

The conversation function unit 212 creates a link to the file on the basis of the answer of the generative AI 213, and generates the response message 512 to which a description "Click to open the file." is added. Hereinabove, the processing of generating the response message 512 has been described.

In S710, the interface 217 generates a display screen on the basis of the response generated by the conversation function unit 212. Then, the interface 217 displays a response message on the display unit 231. As a result, the response message 512 of the UI screen 500 illustrated in FIG. 5 is displayed.

The processing of the question from the user 104 and the response in S704 to S710 is repeated until the conversation session is ended.

On the UI screen 500 in FIG. 5, the user 104 further inputs a question sentence "What is the file that is the basis for the numerical value?" in the message input box 513. According to the question of the user 104, the conversation function unit 212 supplements the "numerical value" from the history of the conversation history storage unit 221 to generate a prompt indicating that the LLM penetration rate in 2024 is 20%, which is in "Mr. D's presentation material of yesterday's ABC conference" in "¥USER104¥work¥presentation_conference.ppt".

The information processing device 101 of the present embodiment can select data related to the question sentence input by the user 104 from the data source 222 of the information processing device 101 and obtain a response using the generative AI 213. In response to the question of the user 104, a response can be obtained by referring to the data owned by the user 104, so that a response personalized to the user 104 can be performed. Furthermore, since the generative AI 213 operates inside the information processing device 101, it is possible to obtain a response using the generative AI 213 without transmitting personal data owned by the user 104 to the outside. Furthermore, since vector data is stored in the information processing device 101, data similar to the user's question can be searched at high speed.

### <Second embodiment>

Next, a second embodiment will be described. Description of parts overlapping with the first embodiment will be omitted, and differences will be described.

In the first embodiment, the data referred to by the generative AI 213 is a file owned by the user 104 in the data source 222 in the information processing device 101. By setting sharing in shared data settings 604 and sharing range settings 605 on a settings screen 600 of FIG. 6, it is possible to share data in a data source 222 among a plurality of users. Furthermore, a generative AI 213 may refer to a web page or data stored in a web page storage unit 308 and a shared data storage unit 309 of a server device 107. If sufficient data is not accumulated in the data source 222 in an information processing device 101, the generative AI 213 may not be able to generate a valid answer. If the data of the data source 222 can be shared among a plurality of users, even when the data of one user is not sufficiently accumulated, the generative AI 213 can generate a valid answer using the shared data.

In the first embodiment, the vector data creation unit 216 regularly or irregularly acquires a file from the data source 222, creates vector data of the file, and stores the vector data in the vector data storage unit 223.

In the second embodiment, a vector data creation unit 216 may create vector data of a file of the data source 222 by a generative AI 213 every time a search unit 215 searches the data source 222. The created vector data is stored in a vector data storage unit 223. With this configuration, the vector data creation unit 216 can efficiently create vector data.

In addition, the search unit 215 may search for the vector data of the vector data storage unit 223, and if similar data cannot be found, search the data of the data source 222 to search for similar data. Further, the vector data creation unit 216 may store vector data obtained by vectorizing data searched from the data source 222 in the vector data storage unit 223. With this configuration, since the vector data creation unit 216 creates vector data as necessary every time the search unit 215 performs a search, the amount of processing can be reduced and vector data can be created efficiently as compared with creation of vector data at one time.

In the shared data settings 604 on the settings screen 600, a storage region (e.g., partition) of the storage unit 204, a folder, or an individual file that may be shared by the user 104 can be set. As in the example of the settings screen 600, folders may be set as sharing targets by checking a list of folders. The setting of folders and files is not limited to the check method, and may be any method.

In the sharing range settings 605, a range of users sharing the folder or file set in the shared data settings 604 is set. As an example, the user 104 may select a user in the company, a user in a department to which the user belongs, a specific user, and the like to share data of the data source 222 of the information processing device 101 of the user 104. The sharing is set not necessarily by selecting, but may be set by directly inputting a user name or a user ID.

The data to be shared in the shared data settings 604 may be set for each range of users to be shared in the sharing range settings 605. Conversely, the range of users to be shared may be set for each piece of data to be shared.

Next, data sharing processing will be described. The information processing device 101 and another information processing device are connected to each other via a LAN 108, and can communicate with each other via a communication unit 201. Here, another user who shares information is described as a user 105, and another information processing device is described as an information processing device 102. The vector data creation unit 216 of the information processing device 101 provides the vector data of the range set in the shared data settings 604 of the vector data storage unit 223 to the information processing device 102 of the user 105 set in the sharing range settings 605 via the communication unit 201. In addition, when the information processing device 101 receives vector data of shared data of the other information processing device 102, the vector data creation unit 216 stores the vector data in the vector data storage unit 223.

By sharing the vector data of the data of the data source 222 with other users in this manner, the question-and-answer system can answer a questions using data of other users. Furthermore, since the data to be exchanged is vector data, the content of the data cannot be understood even if a user browses the data. Therefore, secure data sharing is possible in terms of information security.

Furthermore, the information processing device 101 may acquire web pages and data of the web page storage unit 308 and the shared data storage unit 309 of the server device 107, create vector data by vectorizing the data of the web page storage unit 308 and the shared data storage unit 309 by the vector data creation unit 216, and store the created vector data in the vector data storage unit 223 of the information processing device 101. The search unit 215 can search for data of the server device 107 in the information processing device 101, and the generative AI 213 can output an answer using the shared web pages or data of the server device 107.

With this configuration, it is possible to answer a question by the question-and-answer system using the shared web pages and data of the web page storage unit 308 and the shared data storage unit 309. It is conceivable that vector data of the web page storage unit 308 and the shared data storage unit 309 is stored in a storage unit 306 of the server device 107, and the generative AI 213 of the information processing device 101 replies using the vector data of the server device 107. However, in this case, access control by the server device 107 becomes complicated. By acquiring the web pages and the data of the web page storage unit 308 and the shared data storage unit 309 for which the access of the user 104 of the information processing device 101 is permitted by the authentication DB and vectorizing and storing the acquired web pages and data in the vector data storage unit 223 of the information processing device 101, the vector data of the web page storage unit 308 and the shared data storage unit 309 to be shared can be set as the search target of the search unit 215 without considering access control at the time of answering a question.

As described above, the information processing device according to the present embodiment shares data of a data source with another information processing device, and thus, can use data of another user for an answer to be given by the generative AI 213. For this reason, even a user who lacks information necessary for work due to personnel transfer or the like can answer questions using data of another user, and can support start-up of work.

The invention is not limited to the above embodiments, and various modifications and changes can be made within the scope of the invention.

## Claims

1. An information processing device (101) comprising:
a data source (222) that stores data owned by a user;
a question input means (212) for receiving an input of a question from a user;
a search means (215) for searching for data in the data source on the basis of the question of the user;
a prompt generation means (212) for generating a prompt on the basis of the question of the user and the data searched by the search means (215);
a generative AI (213) configured to generate an answer to the question of the user on the basis of the prompt;
a response generation means (212) for generating a response to the question on the basis of the answer; and
an output means (217) for outputting the response generated by the response generation means (212).

2. The information processing device (101) according to claim 1, further comprising:
a vector data creation means (216) for vectorizing data; and
a vector data storage means (223) for storing vectorized data, wherein
the vector data creation means (216) creates vector data by vectorizing data of the data source (222),
the vector data storage means (223) stores vector data corresponding to the data of the data source, and
the search means (215) searches for vector data stored in the vector data storage means (223).

3. The information processing device (101) according to claim 2, further comprising:
a shared data setting means (604) for setting data to be shared with another information processing device (102) ; and
a first shared data providing means (216) for providing vector data of the shared data stored in the vector data storage means (223) to the other information processing device (102).

4. The information processing device (101) according to claim 2 or 3, further comprising:
a shared user setting means (605) for setting a user with whom to share data; and
a second shared data providing means (216) for providing vector data stored in the vector data storage means (223) to another information processing device (102) of the sharing user.

5. The information processing device (101) according to any one of claims 2 to 4, wherein
the vector data storage means (223) stores vector data received from another information processing device (102).

6. A computer program comprising instructions which, when executed by a computer (101), cause the computer to perform a method comprising:
storing data owned by a user in a data source (222);
receiving an input of a question from a user via a question input means (212) (S704);
searching for data in the data source (222) on the basis of the question of the user using a search means (215) (S706);
generating a prompt on the basis of the question of the user and the searched data by the search means (215) using a prompt generation means (212) (S707);
processing the prompt using a generative AI (213) to generate an answer to the question of the user (S708);
generating a response to the question on the basis of the generated answer using a response generation means (212) (S709); and
outputting the generated response using an output means (217) (S710).
